# EUROPEAN PATENT APPLICATION

(11) **EP 1 630 599 A1**
(43) Date of publication of application: **01.03.2006**
(21) Application number: 04735114.3
(22) Date of filing: 27.05.2004
(51) Int. Cl.: G03C 1/73, G03C 1/72, G11B 7/24, G11B 7/135, G11B 7/0045

(54) **INFORMATION RECORDING MEDIUM AND ITS MANUFACTURING METHOD, RECORDING/REPRODUCING METHOD, AND OPTICAL INFORMATION RECORDING/REPRODUCING DEVICE**

(30) Priority: 28.05.2003 JP 2003150633
(71) Applicant: MATSUSHITA ELECTRIC INDUSTRIAL CO., LTD., Kadoma-shi, Osaka 571-8501 (JP)
(72) Inventor: SHIONO, Teruhiro, - (JP); YAMAMOTO, Hiroaki, -- (JP); NISHINO, Seiji, - (JP); ITO, Tatsuo, - (JP)
(74) Representative: Jeffrey, Philip Michael
(86) International application number: PCT/JP2004/007660
(87) International publication number: WO 2004/107040

(57) **Abstract**

An information recording medium is provided that includes a recording portion (3), which is irradiated with a recording light or a reproducing light so that information is recorded or reproduced thereto or therefrom. The recording portion (3) contains a first phosphor and a photon-mode photosensitive material. The first phosphor has a property of absorbing a first light having a wavelength of λ₁/n and then emitting a second light having a wavelength longer than that of the first light, where λ₁ is a wavelength of the recording light. The photosensitive material absorbs the second light and then exhibits a change in an optical constant thereof. A n-photon absorption sensitivity of the first phosphor with respect to the recording light is greater than a n-photon absorption sensitivity of the photosensitive material with respect to the recording light, where n is an integer not less than 2.

## Description

### Technical Field

The present invention relates to an information recording medium capable of recording information bits, a method for producing the same, a recording or reproducing method, and an optical information recording and reproducing device. The present invention particularly relates to a highly sensitive and high-speed photon-mode information recording medium, a method for producing the same, a recording or reproducing method, and an optical information recording and reproducing device.

### Background Art

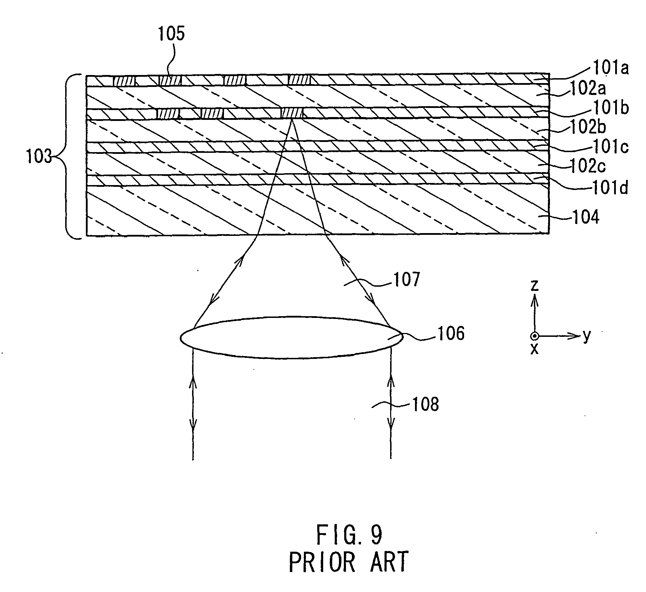

As an information recording medium capable of recording information three-dimensionally, there has conventionally been an information recording medium shown in FIG. 9 (Yoshimasa KAWATA, et al.: "Three-dimensional optical memory using an organic multilayered medium", Optics Japan 2000, Proceedings, p. 95-96, 7pB12 (2000)). This recording medium has a configuration in which recording layers 101a to 101d made of a photon-mode recording material, and intermediate layers 102a to 102c are stacked alternately on a glass substrate 104. A urethane-urea copolymer is used as the photon-mode recording material, and a polyvinyl alcohol (PVA) film or a polymethyl methacrylate (PMMA) film is used for forming each intermediate layer.

A laser light 108 is focused (irradiation with converged light 107) onto a target recording layer among the recording layers 101a to 101d of the information recording medium by an objective lens 106, whereby information can be recorded. The laser light 108 used herein is a pulse laser light with a pulse width of about 100 femtoseconds and a very high peak power. By focusing such a pulse laser light onto the recording layers 101a to 101d, information can be recorded onto the recording layers 101a to 101d, using two-photon absorption, which is one of the non-linear absorption phenomena.

Specifically, two-photon absorption occurs in a portion (focal point) with a high power density of a converged light, among the regions of the recording layers 101a to 101d irradiated with the converged light 107, and there occurs a phenomenon which looks as if the layers were irradiated with a light having a wavelength that is a half of the wavelength of the light actually irradiating the layers (recording light), whereby an information bit 105 is written. By focusing a light with a low power onto the information bit 105, and detecting the reflected light with a photodetector (not shown) via the objective lens 106, a signal can be reproduced. Since the information recording medium has a configuration in which a plurality of recording layers are stacked in an optical axis direction (z direction) of the objective lens, information can be recorded three-dimensionally to increase the recording capacity.

However, in the above-mentioned conventional information recording medium, there was a problem that recording sensitivity of the recording layers was poor. Therefore, in the case of forming one information bit with one pulse, it is necessary to use a femtosecond laser with a very high peak power (about 100 kW) as a light source, which makes the configuration of a light source complicated. In the case of using a light source with a smaller peak power, it is necessary to repeat recording at the same place a number of times (e.g., tens to thousands of times) (accumulation recording can be performed since a photon-mode recording material is used), which decreases the recording speed.

### Disclosure of Invention

An information recording medium of the present invention includes a recording portion that is irradiated with a recording light or a reproducing light so that information is recorded or reproduced thereto or therefrom. The recording portion includes: a first phosphor that has a property of absorbing a first light having a wavelength of λ₁/n and then emitting a second light, where λ₁ is a wavelength of the recording light, and n is an integer not less than 2; and a photon-mode photosensitive material that absorbs the second light and then exhibits a change in an optical constant thereof. A n-photon absorption sensitivity of the first phosphor with respect to the recording light is greater than a n-photon absorption sensitivity of the photosensitive material with respect to the recording light.

A recording or reproducing method of the present invention, which is a method for recording or reproducing information to or from the information recording medium of the present invention, includes the step of irradiating the recording portion with the recording light so that the second light emitted from the first phosphor causes the optical constant of the photosensitive material to change. In the step, a wavelength of the second light is shorter than a wavelength of the recording light and a wavelength of the reproducing light.

A method of the present invention for producing an information recording medium is a method for producing an information recording medium that includes a recording portion having one or more recording layers, which is irradiated with a recording light or a reproducing light so that information is recorded or reproduced thereto or therefrom, and the method includes the step of forming the recording layer by applying a coating containing a first phosphor and a photosensitive material. The first phosphor has a property of absorbing a first light having a wavelength of λ₁/n and then emitting a second light, where λ₁ is a wavelength of the recording light. The photosensitive material absorbs the second light and then exhibits a change in an optical constant thereof. A n-photon absorption sensitivity of the first phosphor with respect to the recording light is greater than a n-photon absorption sensitivity of the photosensitive material with respect to the recording light.

An optical information recording and reproducing device of the present invention is an optical information recording and reproducing device for performing recording and reproduction of information to and from the information recording medium of the present invention, and the device includes: a light source for emitting the recording light; a light source for emitting the reproducing light; an objective lens for focusing the recording light and the reproducing light onto the information recording medium; and a photodetector for detecting light reflected by the information recording medium. The optical information recording and reproducing device forms an information bit in the recording portion by utilizing a change in an optical constant of the recording portion in the information recording medium.

### Brief Description of Drawings

FIG. 1A is an explanatory view illustrating a cross-sectional configuration of the information recording medium of Embodiment 1 of the present invention and a manner of how information is recorded/reproduced thereto/therefrom. FIG. 1B is an enlarged view showing a recording layer of the information recording medium shown in FIG. 1A.
FIGS. 2A to 2D are cross-sectional views illustrating respective production steps of the information recording medium of Embodiment 1 of the present invention.
FIG. 3 is a view schematically illustrating a configuration of an optical head of an optical information recording and reproducing device of Embodiment 1 of the present invention.
FIG. 4A is an explanatory view illustrating a cross-sectional configuration of an information recording medium of Embodiment 2 of the present invention and a manner of how information is recorded/reproduced thereto/therefrom. FIG. 4B is an enlarged view showing a recording layer of the information recording medium shown in FIG. 4A.
FIG. 5A is an explanatory view illustrating a cross-sectional configuration of the information recording medium of Embodiment 3 of the present invention and a manner of how information is recorded/reproduced thereto/therefrom. FIG. 5B is an enlarged view showing a recording layer of the information recording medium shown in FIG. 5A.
FIG. 6A is an explanatory view illustrating a cross-sectional configuration of the information recording medium of Embodiment 4 of the present invention and a manner of how information is recorded/reproduced thereto/therefrom. FIG. 6B is an enlarged view showing a recording layer of the information recording medium shown in FIG. 6A.
FIG. 7 is a graph showing the relationship among an energy threshold value, a peak power threshold value, and a pulse width of a laser light at the time of recording one bit in an information recording medium of Example of the present invention.
FIG. 8 is a graph showing the relationship among an energy threshold value, a peak power threshold value, and a pulse width of a laser light at the time of recording one bit in an information recording medium of Comparative Example.
FIG. 9 is an explanatory view illustrating a cross-sectional configuration of an example of a conventional information recording medium and a manner of how a signal is recorded/reproduced thereto/therefrom.

### Description of the Invention

The information recording medium of the present invention includes a first phosphor that has a property of absorbing a first light having a wavelength of λ₁/n (n is an integer not less than 2) and then emitting a second light, where λ₁ is a wavelength of the recording light, and a photon-mode photosensitive material (hereinafter simply referred to as photosensitive material) that absorbs the second light and then exhibits a change in an optical constant thereof, such as a refractive index. A n-photon absorption sensitivity of the first phosphor with respect to the recording light is greater than a n-photon absorption sensitivity of the photosensitive material with respect to the recording light. Therefore, in the information recording medium of the present invention, the recording of information is carried out with higher sensitivity at a higher speed, as compared with the case where information bits are recorded directly in the photosensitive material by n-photon absorption. Further, since the recording sensitivity is improved, one information bit can be formed with one pulse, even if the laser light does not have a significantly high peak power as conventionally.

It should be noted that in the present specification, the "photosensitive material" refers to a material that exhibits a physical or chemical change due to an effect of light, and a material that exhibits a change in an optical constant thereof such as a refractive index due to an effect of light preferably is used as the photosensitive material.

In the information recording medium of the present invention, for instance, the recording portion includes one or more recording layers, and the recording layer includes the photosensitive material and the first phosphor mixed in the photosensitive material.

In the information recording medium of the present invention, for instance, the recording portion includes a plurality of the recording layers, and the plurality of the recording layers are stacked with an intermediate layer substantially transparent with respect to the recording light and the reproducing light interposed between the recording layers. It should be noted that "substantially transparent with respect to the recording light and the reproducing light" signifies that the matter identified as such allows the recording light and the reproducing light, except for scattered components thereof, to transmit therethrough with less absorption. More specifically, the transmittance per one layer preferably is not less than 95 %, more preferably not less than 99%.

The information recording medium of the present invention may be further configured, for instance, so that the recording portion includes: a recording auxiliary layer containing the first phosphor; and a recording layer containing the photosensitive material, the recording layer being disposed in contact with the recording auxiliary layer.

The information recording medium of the present invention may be further configured, for instance, so that a plurality of stacks, each of which is composed of the recording layer and the recording auxiliary layer, are provided, and the stacks are stacked with an intermediate layer substantially transparent with respect to the recording light and the reproducing light being interposed between adjacent stacks.

The information recording medium of the present invention may be configured further, for instance, so that an entirety of the recording portion is the recording layer. In this case, it is adequate that the recording layer has a thickness not less than twice the longer wavelength among a wavelength of the recording light and a wavelength of the reproducing light.

The information recording medium of the present invention preferably further is configured, for instance, so that information recorded therein is erased by irradiation with an erasing light having a wavelength of λ₂, and the recording portion further preferably includes a second phosphor that has a property of absorbing a third light having a wavelength of λ₂/n and then emitting a fourth light. The fourth light has a wavelength that is longer than λ₁/n and falls in a range of wavelengths of light absorbed by the photosensitive material in an information-recorded state. Besides, a n-photon absorption sensitivity of the second phosphor with respect to the erasing light is greater than a n-photon absorption sensitivity of the photosensitive material in the information-recorded state with respect to the erasing light. In the case where the recording portion includes the second phosphor as described above, the sensitivity for erasing information by utilizing n-photon absorption is enhanced.

In the information recording medium of the present invention, it is preferable that the second light has a wavelength shorter than the wavelength of the recording light and the wavelength of the reproducing light. For instance, the wavelength of the second light preferably is not less than 0.3 µm and not more than 0.5 µm. In the case where the wavelength of the second light is not less than 0.3 µm and not more than 0.5 µm, high-density recording is enabled.

In the information recording medium of the present invention, it is sufficient that an absorptivity of the photosensitive material with respect to the second light is greater than its absorptivities with respect to a recording light and a reproducing light, but it is preferable that the photosensitive material is substantially transparent with respect to the recording light and the reproducing light. In the case where the photosensitive material is substantially transparent with respect to the recording light and the reproducing light, the three-dimensional recording and reproduction of information is enhanced.

In the information recording medium of the present invention, it is preferable that the photosensitive material contains a material that is capable of absorbing the first light. In the case where the photosensitive material contains a material that is capable of absorbing the first light, the recording sensitivity is enhanced.

In the information recording medium of the present invention, for instance, a photochromic material is used as the photosensitive material. Examples of the photochromic material include diarylethene. The photosensitive material may be a side-chain-type liquid crystal polymer or a photopolymer. In the case where the photosensitive material contained in the recording layer is diarylethene, the recording layer preferably further contains a resin substantially transparent with respect to the recording light and the reproducing light. This is because the re-crystallization of diarylethene can be inhibited. Further, in the case where the first phosphor is a material that easily re-crystallizes, the re-crystallization of the first phosphor also can be inhibited.

In the information recording medium of the present invention, it is preferable that the first phosphor is in a form of particles, and the particles have an average particle diameter smaller than the wavelength of the recording light and the wavelength of the reproducing light. In the case where the average particle diameter of the particles is smaller than the wavelength of the recording light and the wavelength of the reproducing light, a diffraction loss or a scattering loss is reduced, whereby a light loss is reduced.

The particles are made of, for instance, an inorganic material. The particles may be made of a semiconductor material. The semiconductor material preferably has an energy gap of not less than 2.5 eV and not more than 8.3 eV The particles made of the semiconductor material preferably are deactivated by doping with hydrogen, for instance.

The first phosphor may be an organic fluorochrome. In the case where the first phosphor is an organic fluorochrome, it is preferable that the recording layer further contains a resin substantially transparent with respect to the recording light and the reproducing light. In the case where the recording layer contains a resin substantially transparent with respect to the recording light and the reproducing light, concentration quenching can be reduced. The resin substantially transparent with respect to the recording light and the reproducing light preferably contains a dendrimer polymer, for instance. In the case where the resin contains a dendrimer polymer, the association of adjacent molecules of the first phosphor is inhibited, whereby a decrease in the light emission efficiency due to the concentration quenching can be reduced effectively. The organic fluorochrome preferably contains a p-septphenyl-based fluorochrome.

In the case where both of the photosensitive material and the first phosphor are organic materials, respectively, it is preferable that either one of the photosensitive material and the first phosphor is bonded with a side chain of the other. Further, in the case where the photosensitive material, the first phosphor, and the second phosphor are organic materials, respectively, it is preferable that to a side chain of one material selected from the group consisting of the photosensitive material, the first phosphor, and the second phosphor, at least one material from the remaining two materials is bonded.

With the aforementioned recording or reproducing method of the present invention, the high-density recording can be performed with respect to the information recording medium of the present invention.

With the aforementioned method of the present invention for producing an information recording medium, the information recording medium of the present invention can be produced easily at a low cost.

The method of the present invention for producing an information recording medium preferably further includes the step of forming an intermediate layer by applying a coating made of a material substantially transparent with respect to the recording light and the reproducing light, wherein the step of forming the recording layer and the step of forming the intermediate layer are repeated alternately a predetermined number of times. With this method, an information recording medium in which a plurality of recording layers are stacked can be produced easily at a low cost.

In the method of the present invention for producing an information recording medium, the recording layer may be formed by applying a coating that contains a first phosphor, a photosensitive material, and a second phosphor. Here, it should be noted that the second phosphor has a property of absorbing a third light having a wavelength of λ₂/n and then emitting a fourth light, where λ₂ is a wavelength of an erasing light with which the information recording medium is irradiated so that information recorded therein is erased. The fourth light has a wavelength that is longer than λ₁/n and is included in a range of wavelengths of light absorbed by the photosensitive material in an information-recorded state, and a n-photon absorption sensitivity of the second phosphor with respect to the erasing light is greater than a n-photon absorption sensitivity of the photosensitive material in the information-recorded state with respect to the erasing light.

With the aforementioned optical information recording and reproducing device of the present invention, information can be recorded in an information recording medium of the present invention.

The optical information recording and reproducing device of the present invention preferably further includes a light source for emitting an erasing light. The light source for emitting the erasing light preferably is a flash lamp. In the case where a flash lamp is provided as a light source for emitting the erasing light, a plurality of information bits can be erased at once by one-photon absorption.

In the optical information recording and reproducing device of the present invention, it is preferable that the light source for emitting the recording light is a pulse laser light source, and a pulse width thereof is in a range of 100 femtoseconds to 10 nanoseconds. Besides, it is preferable that a wavelength of the light source for emitting the reproducing light is shorter than a wavelength of the light source for emitting the recording light. In the case where the wavelength of the light source for emitting the reproducing light is shorter than the wavelength of the light source for emitting the recording light, higher densification is possible.

In the optical information recording and reproducing device of the present invention, it is preferable that the optical information recording and reproducing device records information bits three-dimensionally in the recording portion in the information recording medium in an order such that light should not pass through already-recorded information bits in the recording portion. For instance, information bits preferably are recorded in the recording portion in the information recording medium, from a position farther from the objective lens toward a position closer to the objective lens in this order. By recording information bits in the foregoing order, the stray light such as scattered light and unnecessary diffracted light due to the information bits can be reduced.

In the optical information recording and reproducing device of the present invention, it is preferable that the light source for emitting the recording light and the light source for emitting the reproducing light are formed with one light source that is capable of functioning as both. This results in that only one light source is provided, whereby the configuration of the optical information recording and reproducing device is simplified.

### (Embodiment 1)

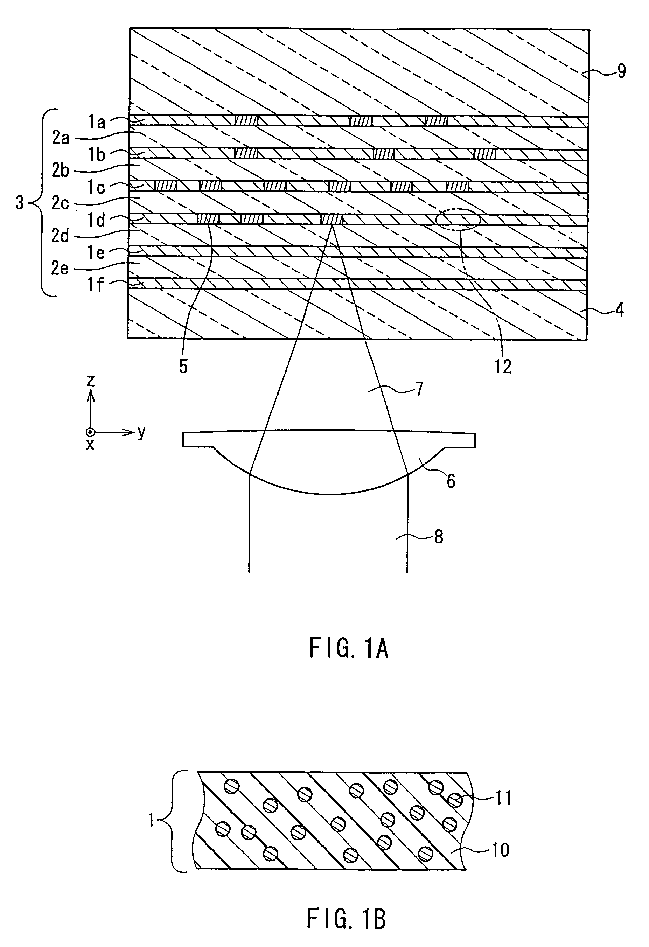

An information recording medium and a method for producing the same, a recording or reproducing method, and an optical information recording and reproducing device of Embodiment 1 according to the present invention are described below with reference to FIGS. 1 to 3.

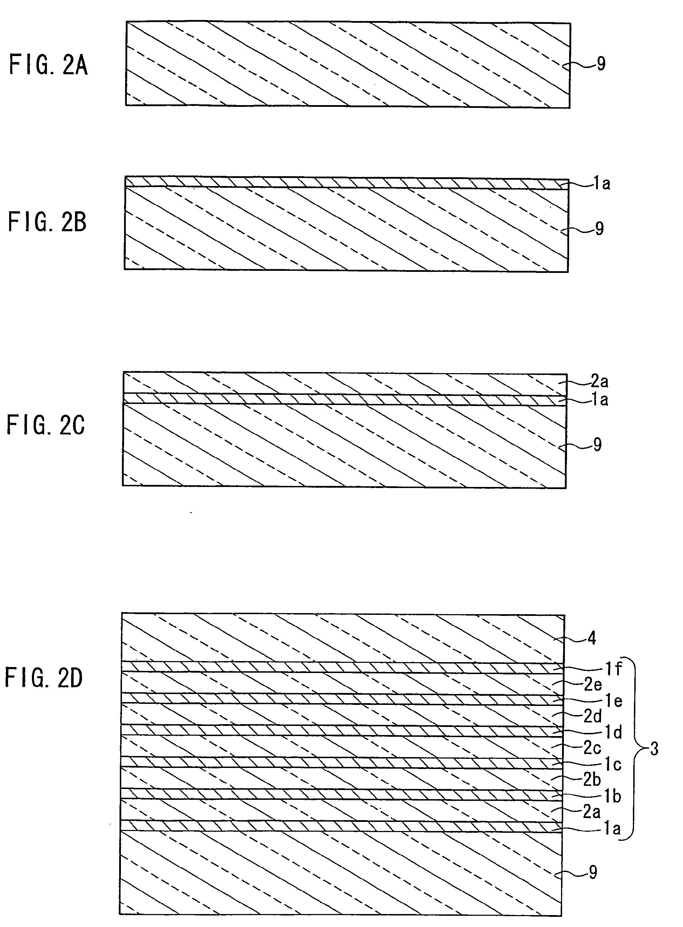

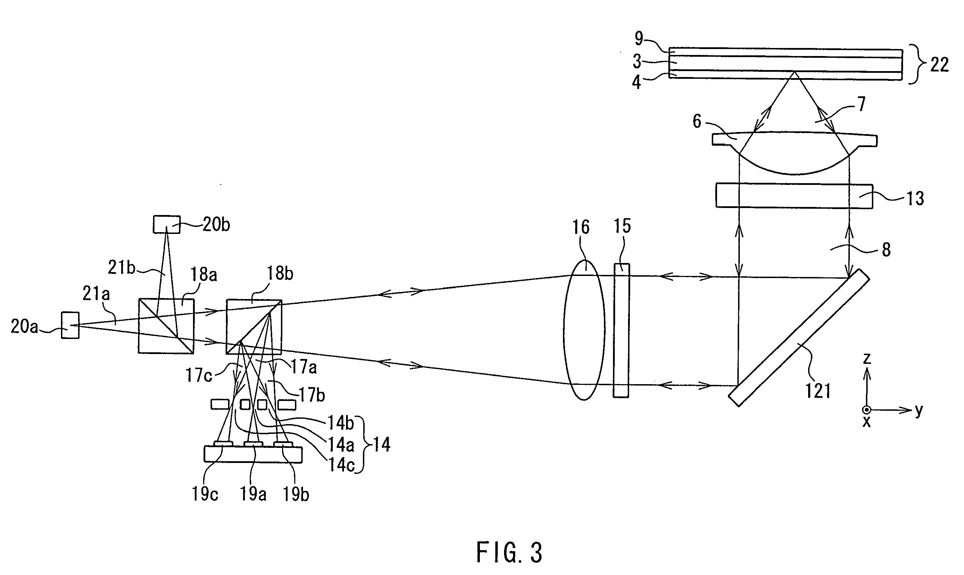

FIG. 1A shows a cross-sectional configuration of the information recording medium of the present embodiment and a manner of how information is recorded and reproduced thereto and therefrom. FIG. 1B is an enlarged view showing a recording layer shown in FIG. 1A. FIG. 2 shows cross-sectional views of respective production steps of the information recording medium of the present embodiment. FIG. 3 shows a schematic configuration of an optical head of an optical information recording and reproducing device of the present embodiment.

As shown in FIG. 1A, in the information recording medium of the present embodiment, a recording portion 3 and a protective layer 4 are formed on a substrate 9. The recording portion 3 includes a plurality of recording layers 1a to 1f, and a plurality of intermediate layers 2a to 2e. The recording layers and the intermediate layers are stacked alternately. More specifically, in the recording portion 3, a recording layer 1a, an intermediate layer 2a, a recording layer 1b, ..., a recording layer 1e, an intermediate layer 2e, and a recording layer 1f are stacked in this order from a substrate 9 side. The information recording medium of the present embodiment includes a plurality of recording layers in the recording portion 3, whereby recording of information in a thickness direction can be performed, in addition to the recording of information in a planar direction. Hereinafter, an arbitrary recording layer among the recording layers 1a to 1f will be referred to as a recording layer 1, and an arbitrary intermediate layer among the intermediate layers 2a to 2e will be referred to as an intermediate layer 2.

As shown in FIG. 1A, in the information recording medium of the present embodiment, the protective layer 4 is located on the light incident side at the time of recording and reproducing information. At the time of recording, a laser light is focused onto any one of the recording layers 1a to 1f by an objective lens 6 (converged light 7), whereby an information bit 5 is formed. At the time of reproducing, the laser light 8 is focused onto a desired recording layer 1a to 1f by the objective lens 6 (converged light 7), and information is reproduced by utilizing light reflected by the information bit 5.

FIG. 1B is an enlarged view showing a recording layer 1 (in a region 12 shown in FIG. 1A). The recording layer 1 is formed by dispersing a first phosphor 11 in a photosensitive material 10. It is preferable that in the recording layer 1, the photosensitive material 10 and the first phosphor 11 are mixed substantially homogeneously.

With a wavelength of a recording light being assumed to be λ₁, the first phosphor 11 has a property of absorbing light having a wavelength of λ₁/n (first light) and emitting light having a wavelength greater than λ₁/n (second light). On the other hand, the photosensitive material 10 is capable of absorbing the second light, and has a property such that its optical constant changes upon absorption of the second light. Besides, to form the photosensitive material 10, a material characterized in that its absorptivity with respect to the second light is greater than its absorptivities with respect to a recording light and a reproducing light is selected. A n-photon absorption sensitivity of the first phosphor 11 with respect to the recording light is greater than a n-photon absorption sensitivity of the photosensitive material 10 with respect to the recording light. Therefore, it is preferable to record information bits 5 by irradiating the recording layer 1 with the recording light having the wavelength λ₁, whereby occurs a phenomenon which looks as if the first phosphor 11 were caused to absorb a first light (wavelength: λ₁/n), that is, the n-photon absorption, and the photosensitive material 10 is caused to absorb the second light emitted from the first phosphor 11, rather than to record information bits directly in the photosensitive material 10 by the n-photon absorption, since the information recording is performed with a high sensitivity at a high speed.

It should be noted that the n-photon absorption includes two-photon absorption (n=2) and multiphoton absorption (n is an integer of not less than 3). In the two-photon absorption, the absorption sensitivity is approximately proportional with a square of an intensity of light, while in the multiphoton absorption, the absorption sensitivity is approximately proportional with an n-th power of an intensity of light. Further, the greater absorptivity with respect to the first light the first phosphor 11 has as compared with its absorptivity with respect to the recording light, the more easily non-linear phenomena of two-photon absorption, multiphoton absorption, etc., tend to occur at a focal point where a light power density is high. As a result, excellent information bits 5 are formed.

In the information recording medium of the present embodiment, as shown in FIG. 1B, the first phosphor 11 and the photosensitive material 10 are mixed homogeneously in the recording layer. Therefore, the first phosphor 11 and the photosensitive material 10 are in closer contact with each other, as compared with an information recording medium according to Embodiment 2 that will be described later. This allows information bits to be formed with clearer outlines.

At the time of recording, the photosensitive material 10 absorbs at least a part of the second light emitted by the first phosphor 11, whereby its optical constants such as its refractive index and absorption spectrum change (a portion whose optical constants have changed becomes the information bit 5), and in the case where three-dimensional recording is performed, it is preferable that the refractive index changes as a change in the optical constant, since it causes smaller optical loss. On the other hand, the first phosphor 11 itself does not have changes in its optical constants, but it acts as a catalyst for improving the recording sensitivity.

In the case of a conventional information recording medium in which information bits are recorded directly in the photosensitive material 10 by, for instance, two-photon absorption, a range of wavelengths of light absorbed (hereinafter referred to as absorption wavelength) by the photosensitive material 10 is required to include a wavelength equal to half of a wavelength of the recording light (hereinafter also referred to as "recording wavelength"). On the other hand, in the case of the information recording medium according to the present embodiment, it is not necessary that an absorption wavelength range of the photosensitive material 10 includes the wavelength equal to half of the recording wavelength, and it is sufficient that the absorption wavelength range of the photosensitive material 10 includes the wavelength of the second light (fluorescence). Generally, the phosphor provides a higher degree of freedom in selecting a material, as compared with the photosensitive material. Therefore, the information recording medium of the present embodiment is provided with an increased degree of freedom in selecting a recording wavelength.

In the information recording medium of the present embodiment, it is preferable to select the first phosphor 11 so that the wavelength of the second light is shorter than both of the recording wavelength and a wavelength of a reproducing light (hereinafter also referred to as "reproduction wavelength"), since this enables high-density recording. More specifically, it is preferable to select the first phosphor 11 so that the second light has a wavelength of, for instance, not less than 0.3 µm and not more than 0.5 µm, more preferably, not less than 0.15 µm and not more than 0.5 µm.

Examples of a material used as the photosensitive material 10 include materials in which information can be recorded in the photon mode, such as photochromic materials, side-chain-type liquid crystal polymers, and photopolymers. The photochromic materials allow information once recorded to be erasable, thereby allowing rewritable (R/W) recording to be performed. Examples of the photochromic materials include diarylethene, spiropyran, viologen, and derivatives of the same. For instance, a side-chain-type liquid crystal polymer obtained by bonding a liquid crystal with a side chain of azobenzene is preferable since the information bits 5 have a large change in refractive index (for instance, Δn=0.2 to 0.5) after being recorded, which increases S/N of the reproducing light. Further, a polarization direction can be recorded, and the recording capacity can be approximately doubled. The photopolymers are suitable for the write-once recording, and allow for stable recording. Still further, as the photosensitive material 10 used in the information recording medium of the present embodiment, those having an absorption wavelength in a range of 0.3 µm to 0.5 µm are suitable.

Among these, preferred are those containing diarylethene having five membered heterocyclic rings as an aryl group, which is stable with respect to heat and with which a recording layer having a high durability with respect to repetitive recording can be formed. It should be noted that the above-mentioned examples of diarylethene include various derivatives. More specifically, the examples of diarylethene include: 1,2-bis[2-methylbenzo[b]thiophen-3-yl]-3,3,4,4,5,5,-hexafluoro-1-cyclopentene; 2,3-bis(2,4,5-trimethyl-3-thienyl)maleic anhydride; 2,3-bis(2,4,5-trimethyl-3-thienyl)maleimide; and cis-1,2-dicyano-1,2-bis(2,4,5-trimethyl-3-thienyl)ethene. However, diarylethene is not limited to these.

In the case where diarylethene is used as the photosensitive material 10, preferably, the recording layer 1 further contains a resin substantially transparent with respect to the recording light and the reproducing light, since in such a case the re-crystallization of diarylethene can be inhibited. Examples of the foregoing resin include PMMA, UV-hardening resins, etc. A weight ratio between the foregoing resin and diarylethene in the recording layer 1 suitably is approximately 10:100 to 100:100.

The photosensitive material 10 has a property of absorbing at least a part of the second light emitted by the first phosphor 11, which causes its optical constant such as a refractive index or an absorption spectrum to change. At the same time, the photosensitive material may have a property of absorbing a part of the light having the first wavelength, which causes its optical constant to change. In the case where the photosensitive material 10 is capable of absorbing the first light, information can be recorded with both of the first light and the second light, whereby the recording sensitivity increases.

In other words, the information recording medium according to the present embodiment is an information recording medium that includes a recording portion, and information is recorded or reproduced in or from the recording portion by irradiating the recording portion with a recording light or a reproducing light, wherein the recording portion contains a first phosphor that has a property of absorbing a first light having a wavelength of λ₁/n and emitting a second light having a wavelength longer than that of the first light, and a photosensitive material that absorbs the first light and the second light, whereby its optical constant thereof changes.

For instance, in the case where diarylethene whose absorption wavelength ranges from 0.31 µm to 0.42 µm is used as the photosensitive material and zinc oxide particles (average particle diameter: 0.02 µm) are used as the first phosphor, with the first light having a wavelength of 0.33 µm, a center wavelength of the second light emitted by the first phosphor is 0.39 µm. Since the wavelengths of the first light and the second light are included in the absorption wavelength range of diarylethene (0.31 µm to 0.42 µm), diarylethene is capable of absorbing the first light and the second light.

With regard to such an information recording medium, the recording sensitivity thereof can be increased even if the n-photon absorption sensitivity of the first phosphor with respect to the recording light is not greater than that of the photosensitive material. It is more preferable that the n-photon absorption sensitivity of the first phosphor with respect to the recording light is greater than the n-photon absorption sensitivity of the photosensitive material with respect to the recording light, since in this case the recording sensitivity is increased further.

Besides, it is desirable that the photosensitive material 10, which has a property of absorbing at least a part of the second light emitted by the first phosphor 11 whereby its optical constants such as the refractive index, the absorption spectrum, etc. change, is substantially transparent with respect to a recording light and a reproducing light having a wavelength longer than that of the second light. On the other hand, it is also preferable that the first phosphor 11, characterized in that its absorptivity with respect to the first light is greater than its absorptivities with respect to a recording light and a reproducing light, is also substantially transparent with respect to the recording light and the reproducing light. In the case where thus the photosensitive material 10 and the first phosphor 11 are substantially transparent with respect to the recording light and the reproducing light, the recording light and the reproducing light reach the side farther from the light incident side in the recording portion 3 without significant attenuation. This accordingly enhances the three-dimensional recording and reproduction of information.

In the case where the first phosphor 11 is in particle form, it is preferable that the average particle diameter thereof is substantially smaller than the recording wavelength and the reproduction wavelength. This is because this reduces a diffraction loss, thereby preventing a light loss. Further, it is preferable that the average particle diameter is smaller than one fourth of the shorter one among the recording wavelength and the reproduction wavelength. This reduces not only the diffraction loss but also a scattering loss considerably, thereby reducing stray light, and hence, increasing a light utilization efficiency. In the case where the first phosphor and the photosensitive material are selected so that a difference between a refractive index of the particles and a refractive index of the photosensitive material is, for instance, not more than 0.5, or not more than 0.3, the scattering loss can be reduced to a level that causes substantially no problem. This further increases the light utilization efficiency. It should be noted that examples of such a case include a case where particles partially aggregate and there are particles (aggregation lumps) that have an apparent particle diameter longer than the recording wavelength and reproduction wavelength. It is more preferable that even if particles aggregate, the apparent particle diameter in the aggregation state is shorter than the recording wavelength and the reproduction wavelength.

In the case where the recording layer 1 is, for instance, a thin film with a thickness of not more than approximately 1 µm, a volume ratio between the photosensitive material 10 and the particles 11 appropriately is about 100:1 to 100:200. If the volume ratio is in the foregoing range, the scattering loss due to the particles does not cause a substantial problem, and the recording sensitivity is at a practical level. Further, the foregoing volume ratio preferably is 100:60 to 100:140. It is considered that the recording sensitivity is increased as the first phosphor 1 increases, since the information bits 5 are formed when the photosensitive material 10 absorbs the second light emitted by the first phosphor 11 and the optical constants of the photosensitive material 10 change, but an excessively great ratio of the first phosphor 11, which means an excessively small ratio of the photosensitive material 10, causes a change in the refractive index to become excessively small, and hinders the formation of the information bits 5. The foregoing volume ratio preferably is 100:60 to 100:140, since in this case excellent recording sensitivity is achieved and excellent information bits 5 are formed.

Among the phosphors, some have an extremely great two-photon absorption sensitivity with respect to the recording light with a predetermined wavelength, as compared with photosensitive materials. More specifically, among examples of the first phosphor that will be described later, some have a two-photon absorption sensitivity several tens to several thousands of times the two-photon absorption sensitivity of diarylethene (photosensitive material). For an information recording medium in which information is recorded by multiphoton absorption, a first phosphor 11 may be selected that absorbs the first light having a wavelength of λ₁/n (n is an integer not less than 3) and having a greater n-photon absorption sensitivity with respect to the recording light than that of the photosensitive material 10.

As the first phosphor 11, for instance, an inorganic material can be used. By using an inorganic material, a recording layer with excellent environmental resistance can be formed. Among these, direct energy-gap semiconductor materials are preferable since they emit luminescence with wavelengths according to energy gaps thereof. This characteristic is suitable for the formation of information bits 5 by two-photon absorption or multiphoton absorption. In the case of an indirect energy-gap semiconductor material, if it has an average particle diameter of not more than approximately 10 nm, the material is caused to emit luminescence according to the particle size due to the quantum size effect. Therefore, it can be used as the first phosphor 11 suitably. If a semiconductor material with an energy gap of not less than 2.5 eV and not more than 8.3 eV, the wavelength of the second light can be set in a range of not less than 0.15 µm and not more than 0.5 µm, whereby high-density recording is enabled.

The semiconductor particles have many surface levels in the case where they have a very small average particle diameter, for instance, not more than several tens nm. In the case where the particles have many surface levels, radiationless deactivation of excitons occur due to defects on surfaces, which makes it difficult to emit fluorescence (second light). Therefore, it is preferable that the semiconductor particles are deactivated. In the case where the semiconductor particles are deactivated, an amount of the second light emitted can be increased, whereby the recording sensitivity is improved. There are various methods for deactivation, for instance, a method in which hydrogen is doped by using pulse-modulation inductively coupled plasma (high-concentration hydrogen is dissolved in particles).

As the direct energy-gap semiconductor particles, at least one selected from the group consisting of the following, for instance, can be used: zinc oxide (ZnO) having an energy gap of 3.2 eV (wavelength of fluorescence (hereinafter also referred to as "fluorescence wavelength"): 0.39 µm); gallium nitride (GaN) having an energy gap of 3.62 eV (fluorescence wavelength: 0.34 µm); zinc selenide (ZnSe) having an energy gap of 2.6 eV (fluorescence wavelength: 0.48 µm); aluminum phosphide (AlP) having an energy gap of 2.5 eV (fluorescence wavelength: 0.5 µm); zinc sulfide (ZnS) having an energy gap of 3.6 eV (fluorescence wavelength: 0.34 µm); and cadmium sulfide (CdS) having an energy gap of 2.5 eV (fluorescence wavelength: 0.5 µm).

In the case where the photosensitive material contains diarylethene, at least one selected from the group consisting of ZnO, GaN, and ZnS is preferred. The fluorescence wavelengths thereof are included in the range of the absorption wavelength (photosensitivity wavelength) of diarylethene.

As the indirect energy-gap semiconductor particles, at least one selected from the group consisting of the following, for instance, can be used: silicon (Si); germanium (Ge); tin oxide (SnO₂); titanium oxide (TiO₂); tungsten oxide (WO₃); strontium titanate (SrTiO₃); silicon carbide (SiC); and indium oxide (In₂O₃). The average particle diameter of the indirect energy-gap semiconductor particles preferably is not more than approximately 10 nm. The smaller the average particle diameter is, the shorter wavelength the fluorescence (second light) emitted has, and accordingly, high-density recording is enabled. It should be noted that if the average particle diameter is more than 30 nm to 50 nm, it is difficult to emit fluorescence.

Examples of another inorganic material used as the first phosphor 11 include europium-activated strontium-magnesium pyrophosphate ((Sr, Mg)₂P₂O₇:Eu) having a fluorescence wavelength of 0.39 µm, and barium silicate having a fluorescence wavelength of 0.35 µm. They are useful since they have high fluorescence emission efficiencies.

As the first phosphor, an organic material may be used. Examples of such an organic material include organic fluorochromes. Among the organic fluorochromes, p-septphenyl-based fluorochromes such as 2"',5"'-didecyl-p-septphenyl whose fluorescence wavelength is within the range of 0.3 µm to 0.5 µm are preferred. This is because high-density recording is enabled.

In the case where a p-septphenyl-based fluorochrome is used as the first phosphor, when the wavelength of the first light is set to be 0.20 µm to 0.38 µm, the p-septphenyl-based fluorochrome emits, as the second light, a fluorescence having a center wavelength of 0.39 µm (fluorescence wavelength: 0.36 µm to 0.45 µm). In this case, a material having an absorption wavelength of 0.36 µm to 0.45 µm may be selected as the photosensitive material 10. Further, the recording wavelength may be selected in a range of 0.4 µm to 0.76 µm in the case of the recording by two-photon absorption.

Apart from these, examples of the organic fluorochrome include p-terphenyl (fluorescence wavelength: 0.34 µm), TMQ (fluorescence wavelength: 0.35 µm), BPBD-365 (fluorescence wavelength: 0.365 µm), PBD (fluorescence wavelength: 0.366 µm), PPO (fluorescence wavelength: 0.372 µm), p-quaterphenyl (fluorescence wavelength: 0.374 µm), exalite 377E (fluorescence wavelength: 0.377 µm), exalite 392E (fluorescence wavelength: 0:392 µm), exalite 400E (fluorescence wavelength: 0.397 µm), exalite 351 (fluorescence wavelength: 0.351 µm), exalite 376 (fluorescence wavelength: 0.376 µm), exalite 384 (fluorescence wavelength: 0.384 µm), exalite 389 (fluorescence wavelength: 0.389 µm), exalite 392A (fluorescence wavelength: 0.392 µm), exalite 398 (fluorescence wavelength: 0.398 µm), exalite 404 (fluorescence wavelength: 0.404 µm), exalite 411 (fluorescence wavelength: 0.411 µm), exalite 416 (fluorescence wavelength: 0.416 µm), exalite 417 (fluorescence wavelength: 0.417 µm), exalite 428 (fluorescence wavelength: 0.428 µm), BBQ (fluorescence wavelength: 0.38 µm), LD390 (fluorescence wavelength: 0.39 µm), α-NPO (fluorescence wavelength: 0.4 µm), PBBO (fluorescence wavelength: 0.4 µm), DPS (fluorescence wavelength: 0.406 µm), BBO (fluorescence wavelength: 0.41 µm), POPOP (fluorescence wavelength: 0.419 µm), bis-MSB (fluorescence wavelength: 0.421 µm), stilbene (fluorescence wavelength: 0.42 µm), LD423 (fluorescence wavelength: 0.423 µm), LD 425 (fluorescence wavelength: 0.425 µm), coumarin 440 (fluorescence wavelength: 0.44 µm), coumarin 445 (fluorescence wavelength: 0.445 µm), coumarin 450 (fluorescence wavelength: 0.45 µm), coumarin 460 (fluorescence wavelength: 0.46 µm), coumarin 466 (fluorescence wavelength: 0.466 µm), coumarin 473 (fluorescence wavelength: 0.473 µm), coumarin 478 (fluorescence wavelength: 0.478 µm), coumarin 480 (fluorescence wavelength: 0.480 µm), coumarin 481 (fluorescence wavelength: 0.481 µm), coumarin 485 (fluorescence wavelength: 0.485 µm), coumarin 487 (fluorescence wavelength: 0.487 µm), LD 489 (fluorescence wavelength: 0.489 µm), coumarin 490 (fluorescence wavelength: 0.49 µm), LD490 (fluorescence wavelength: 0.49 µm), coumarin 498 (fluorescence wavelength: 0.498 µm), and coumarin 500 (fluorescence wavelength: 0.5 µm).

In the case where both of the photosensitive material and the first phosphor are made of organic materials, they simply may be mixed in the recording layer 1, but it is preferable that the first phosphor is bonded with a side chain of the photosensitive material, or alternatively, the photosensitive material is bonded with a side chain of the first phosphor. In the case where thus the recording layer is formed with a compound in which either one of the photosensitive material and the first phosphor is bonded with a side chain of the other, the recording sensitivity is improved further, since the foregoing two are adjacent. Besides, it is not necessary to mix the photosensitive material and the particle-form first phosphor homogeneously, unlike the case where the recording layer is formed by mixing a photosensitive material and a first phosphor in particle form. Therefore, the formation of the recording layer is facilitated. For instance, in the case where the photosensitive material 10 is diarylethene, the first phosphor preferably is a p-septphenyl-based fluorochrome. This is because the center wavelength of the fluorescence wavelength of a p-septphenyl-based fluorochrome is substantially identical to the center wavelength of the absorption wavelength of diarylethene.

Regarding the ratio of the photosensitive material and the first phosphor for forming the foregoing compound, the first phosphor preferably is 10 parts by mass to 50 parts by mass with respect to 100 parts by mass of the photosensitive material. The reason is as follows: if the amount of the photosensitive material is excessively small, the amount of change in the refractive index becomes excessively small, whereas if the amount of the first phosphor is excessively small, the effect of the improvement of the recording sensitivity cannot be achieved sufficiently.

A plurality of the intermediate layers 2 (2a to 2e) desirably are formed with a material substantially transparent with respect to light having a wavelength in a range from the wavelength of the first light (λ₁/n) to the greater wavelength among the recording wavelength and the reproduction wavelength (a range from λ₁/n to either λ₁ or the reproduction wavelength). In the case where the intermediate layers 2 are substantially transparent with respect to the first light, the recording light, and the reproducing light, the first light, the recording light, and the reproducing light can reach from the light incident side of the recording portion to the farther side thereof, without significant attenuation. Accordingly, the three-dimensional information recording and reproduction are facilitated.

As the material for the intermediate layers 2, for instance, a UV-hardening resin, PMMA, or a polyester resin can be used. Further, in the case where a resin is added to the recording layers 1 with a view to inhibiting re-crystarization of the photosensitive material or the first phosphor, it is preferable that the intermediate layers are formed with a resin that is substantially the same material as the foregoing resin, because by so doing, problems caused by chemical reactions, such as erosion, can be prevented from occurring at boundary faces between the recording layers and the intermediate layers. Here, it should be noted that the "substantially the same material" refers to a substance of the same type, and they are regarded as the same materials even with different molecular weights due to, for instance, their degrees of polymerization being different from each other.

The substrate 9 and the protective layer 4 can be formed with, for instance, polycarbonate, PMMA, norbornane resin, or cycloolefin resin.

Next, the recording or reproducing method with respect to the information recording medium of the present embodiment is described below, with reference to a specific example. The following specific example is an example in the case where the two-photon absorption recording is performed.

Zinc oxide (ZnO) particles as a semiconductor material, for instance, were used as the first phosphor 11, and diarylethene, for instance, was used as the photosensitive material 10. Diarylethene is a photon-mode recording material that is capable of optical recording. The average particle diameter of the zinc oxide particles was substantially smaller than a recording wavelength (for instance, 0.66 µm) and a reproduction wavelength (for instance, 0.63 µm), for instance, in a range from 0.01 µm to 0.03 µm. The absorption wavelength of diarylethene is 0.31 µm to 0.42 µm. The volume ratio between the zinc oxide particles and diarylethene in the recording layer 1 was set to, for instance, approximately 10:100 to 100:100.

The zinc oxide particles (first phosphor) are substantially opaque with respect to light having a wavelength of approximately not more than 0.38 µm. Therefore, in the case where the two-photon absorption recording is to be performed, the wavelength of the first light should be not more than 0.38 µm, and in the present example, the wavelength was set to 0.33 µm.

When the recording layer 1 is irradiated with a recording light having a peak power of, for instance, approximately 1 W to 400 W and a small pulse width of, for instance, 100 femtoseconds to 10 nanoseconds, the recording light is converged by the objective lens 6, whereby an effect occurs which looks as if the recording wavelength (for instance, 0.66 µm) were reduced to half (for instance, 0.33 µm) in a portion (focal point) where the light has a high power density, and the zinc oxide particles (first phosphor 11) emit the second light (for instance, 0.39µm). Subsequently, the second light is absorbed by diarylethene (photosensitive material 10). When diarylethene absorbs the second light by one-photon absorption, its optical constant, for instance, the refractive index, changes, whereby the information bit 5 is recorded. Since the wavelength of the second light is, for instance, 0.39 µm, high-density recording can be performed. Needless to say, the one-photon absorption sensitivity of diarylethene is higher than the two-photon absorption sensitivity thereof.

The foregoing recording layer 1 is substantially transparent with respect to light having a wavelength of 0.6 µm. Therefore, at the time of reproducing, a semiconductor laser capable of emitting light having a wavelength longer than 0.6 µm, for instance, 0.63 µm, may be used, whereby light loss of a reproducing light passing a plurality of the recording layers 1 can be reduced.

Next, a method for producing the information recording medium of the present embodiment is described below, with reference to FIGS. 2A to 2D.

First, the substrate 9 is prepared (see FIG. 2A), and the recording layer 1a is formed on the substrate 9 by applying thereon a coating containing the photosensitive material and the first phosphor by, for instance, spin coating, or the like (see FIG. 2B). Further thereon, likewise, the intermediate layer 2a is formed by applying a coating containing the material of the intermediate layer by, for instance, spin coating, or the like (see FIG. 2C). Still further thereon, the recording layer 1b, the intermediate layer 2b, the recording layer 1c, ... and the recording layer 1f are formed through the same process performed repetitively. Finally, a coating containing the material of the protective layer 4 is applied on the recording layer 1f so as to form the protective layer 4, or alternatively, film formation or the like is performed on the recording layer 1f so that the protective layer 4 is formed (see FIG. 2D). Thus, by forming the recording layers and the intermediate layers by applying the materials thereof, the information recording medium of the present embodiment can be produced easily and at a low cost.

Alternatively, either one extra intermediate layer or one extra recording layer may be formed so that the extra portion (in other words, a portion that constitutes a part of the recording portion 3, the part being on the light incident side) is used as the protective layer 4. More specifically, a layer like the intermediate layers 2a to 2e may be formed on the recording layer 1f so as to function as the protective layer 4, or alternatively, the recording layer 1f may be formed thicker so that a part thereof functions as the protective layer 4. By so doing, there is no need to form the protective layer 4 through an additional process in addition to the process for forming the recording portion 3, and the protective layer 4 is made of substantially the same material as that of the recording portion.

Next, an optical information recording and reproducing device and a recording or reproducing method of the present embodiment is described below.

As shown in FIG. 3, two types of light sources 20a and 20b, for reproduction and recording, respectively, are provided in an optical head of the optical information recording and reproducing device of the present embodiment. In optical paths from the light sources 20a and 20b to the information recording medium 22, there are provided beam splitters 18a and 18b, a collimator lens 16, a focus/track error signal detection element 15, a mirror 121, and a spherical aberration correction element 13, and an objective lens 6. The light source 20a is a semiconductor laser light source for reproducing, having a wavelength of, for instance, 0.63 µm. The light source 20b is a semiconductor pulse laser light source for recording, having a wavelength of, for instance, 0.66 µm, and a pulse width of, for instance, 100 femtoseconds to 10 nanoseconds.

It should be noted that the light source for recording and the light source for reproduction are provided separately in the optical information recording and reproducing device of the present embodiment, but one light source can be used for recording and reproduction both. In the latter case, for instance, a light source may be used that has a wavelength of 0.66 µm and is configured so as to emit a laser light having a large peak power through pulse oscillation at the time of recording, and to emit a laser light having a small peak power through successive oscillation at the time of reproducing. By so doing, the recording and reproduction of the information recording medium according to the present embodiment can be achieved. By providing one light source so that it is used for the recording and the reproduction both, the configuration of the optical information recording and reproducing device can be simplified further.

In the recording by two-photon absorption, the recording with a greater peak power is more advantageous since the threshold for energy of the recording decreases, and the threshold of the peak power for recording one bit in the information recording medium 22 tends to decrease (however, the threshold of the recording energy increases) as the pulse width of the laser light for recording increases. This is considered to be because when the pulse width of the laser light increases, the energy increases for the foregoing increase in the pulse width. If the recording can be performed with a relatively low peak power, the configuration of the semiconductor laser of the light source 20b for recording can be simplified. A peak power of, for instance, not more than 50 W, is preferable for practical use. For this purpose, the pulse width preferably is set to be not less than 6 picoseconds and not more than 10 nanoseconds. It should be noted that the threshold of the energy is a value of a multiple of the pulse width of the laser light by the peak power threshold.

At the time of recording, the laser light 21b emitted from the light source 20b is bent so as to be directed in the y-axis direction by the beam splitter 18a, and is converted into an approximately parallel light by the collimator lens 16. The light then transmits the diffraction-type focus/track error signal detection element 15 (using the 0-order diffraction light), and its optical path is bent so as to be directed in the z-axis direction by the mirror 121. The laser light 8 thus directed in the z-axis direction passes through the spherical aberration correction element 13, and is focused onto the recording portion 3 of the information recording medium 22 by the objective lens 6 (converged light 7), whereby an information bit 5 (see FIG. 1) is formed, as shown in FIG. 1. The information bit 5 is formed by utilizing a change in an optical constant of the recording layer, and in the present embodiment, the recording is performed by utilizing mainly a change in the refractive index of the photosensitive material 10. In the case of the recording of information by utilizing a change in the refractive index, the absorption loss of light can be decreased.

At the time of reproducing, the laser light 21a emitted from the light source 20a transmits the beam splitters 18a and 18b, and is converted into an approximately parallel light by the collimator lens 16. The light then transmits the diffraction-type focus/track error signal detection element 15 (using the 0-order diffraction light) and its optical path is bent so as to be directed in the z-axis direction by the mirror 121. The laser light 8 thus directed in the z-axis direction passes through the spherical aberration correction element 13, and is focused onto the recording portion 3 of the information recording medium 22 by the objective lens 6 (converged light 7).

The laser light reflected by an information bit returns in an opposite direction, and passes the objective lens 6, the spherical aberration correction element 13, and the mirror 121 in the stated order. Then, the laser light is branched into a plurality of lights by the diffraction-type focus/track error signal detection element 15 (using the first-order diffraction light: it should be noted that in FIG. 3, for simplification, illustration of branched lights is omitted in the optical path from the diffraction-type focus error signal/track error signal detection element 15 to the beam splitter 18b). The plurality of lights are converted by the collimator lens 16 into converged lights, and are deflected by the beam splitter 18b so as to be directed in the -z-axis direction. The plurality of branched lights 17a to 17c thus directed in the -z-axis direction pass pinholes 14a to 14c of the pinhole array 14, respectively, and are detected by photodetectors 19a to 19c, respectively.

Though the pinhole array 14 having a plurality of pinholes is disposed approximately at a focus of an entirety of the branched lights 17a to 17c in the present embodiment, separate pinholes may be arranged at positions corresponding to respective focuses of the branched lights 17a to 17c, respectively. By configuring the pinholes 14a to 14c so that they have sizes smaller than the branched lights 17a to 17c, respectively, it is possible to detect only central portions of the converged lights 17a to 17c, whereby unnecessary high-order aberration lights, distributed in the vicinity of peripheries of the converged lights 17a to 17c, can be removed. This improves not only a reproduction signal but also S/N of error signals of the servo.

It should be noted that since the light amount decreases in the case where the peripheral lights of the branched lights 17a to 17c are removed, in such a case it is preferable that the signal intensity is increased by using avalanche photodiodes (APD) for the photodetectors 19a to 19c. In the case of an information recording medium including a plurality of recording layers also, a sufficient detection light amount cannot be obtained due to limitations on materials. For this reason also, it is preferable to use the APDs.

Alternatively, instead of setting the sizes of the pinholes 14a to 14c smaller than the branched lights 17a to 17c, respectively, the branched lights 17a to 17c may be detected by photodetectors 19a to 19c having smaller areas as compared with the branched lights 17a to 17c, respectively, whereby the same effect can be achieved.

Further alternatively, it may be configured so that only the branched lights 17b and 17c corresponding to the track error signal are allowed to pass the pinholes 14b and 14c of the pinhole array 14 and are detected by the photodetectors 19b and 19c, respectively, while the branched light 17a corresponding to the focus error signal is detected directly by, for instance, the four-division photodetector 19a without passing through a pinhole. In such a configuration, for instance, the astigmatism method can be used as a focus detection method. Besides, the photodetector 19a here may be configured to have a smaller area than a cross-sectional area of the branched light 17a at the detection position, whereby high-order aberration components can be decreased.

In the present embodiment, a single lens with a great numerical aperture NA of, for instance, 0.85, is used as the objective lens 6, but the objective lens 6 may be a lens pair.

In the present embodiment, information bits 5 are recorded three-dimensionally from one to another in the recording portion 3 in an order such that light should not pass through already-recorded information bits 5. By performing the recording in this order, stray light such as scattered light and unnecessary diffracted light due to the information bits 5 can be reduced. More specifically, when information bits 5 are formed in the recording layers from the recording layer (in FIG. 1, the recording layer 1a) disposed at the position farthest from the objective lens 6 to the closer ones in this order, the recording in the foregoing order can be realized. In the information recording medium shown in FIG. 1, information bits may be recorded in the -z⁻axis direction three-dimensionally, for instance, in the order from the recording layer 1a, the recording layer 1b, the recording layer 1c, .... Here, since the thickness of the recording layer(s) 1 through which the converged light 7 passes varies depending on the depth at which an information bit 5 is recorded, it is preferable that a spherical aberration amount is controlled according to the foregoing recording depth by the spherical aberration correction element 13 disposed in the optical path from the light sources 20a and 20b to the objective lens 6. This configuration allows excellent information bits 5 to be formed. As the spherical aberration correction element 13, the following can be used: a liquid crystal element in which the refractive index distribution is variable; a beam expander formed with a combination of a concave lens and a convex lens, configured so that a distance between the lenses in the optical axis direction is variable by an actuator; or a micromachine that is formed with deformable mirrors or reflection micromirrors arranged in parallel so as to control a light phase for correction of a spherical aberration.

It should be noted that the order of the recording is not necessarily in the -z⁻axis direction in the case where there are portions where information bits 5 are not to be recorded and the converged light 7 does not pass already recorded information bits 5.

Still further, in an optical information recording and reproducing device for recording and reproducing information to and from an information recording medium in which a photochromic material is used in the photosensitive material, it is preferable that a light source for erasing is incorporated. By incorporating a light source for erasing, an optical information recording and reproducing device that is capable of rewriting can be realized. In the case where information is erased by utilizing two-photon absorption, a pulse semiconductor laser for erasing with a wavelength of 0.98 µm, for instance, can be used. In the case where the photosensitive material contained in the information recording medium is, for instance, diarylethene, diarylethene after recording (diarylethene at a portion where an information bit is formed) absorbs green-color light. When diarylethene after recording absorbs light having a wavelength of 0.49 µm, an information bit is erased. Alternatively, a green-color light emitting diode (LED) with a wavelength of 450 nm to 580 nm, a flash lamp that emits light containing green-color light, or the like is used as a light source for erasing, a plurality of information bits can be erased at once by utilizing the one-photon absorption.

### (Embodiment 2)

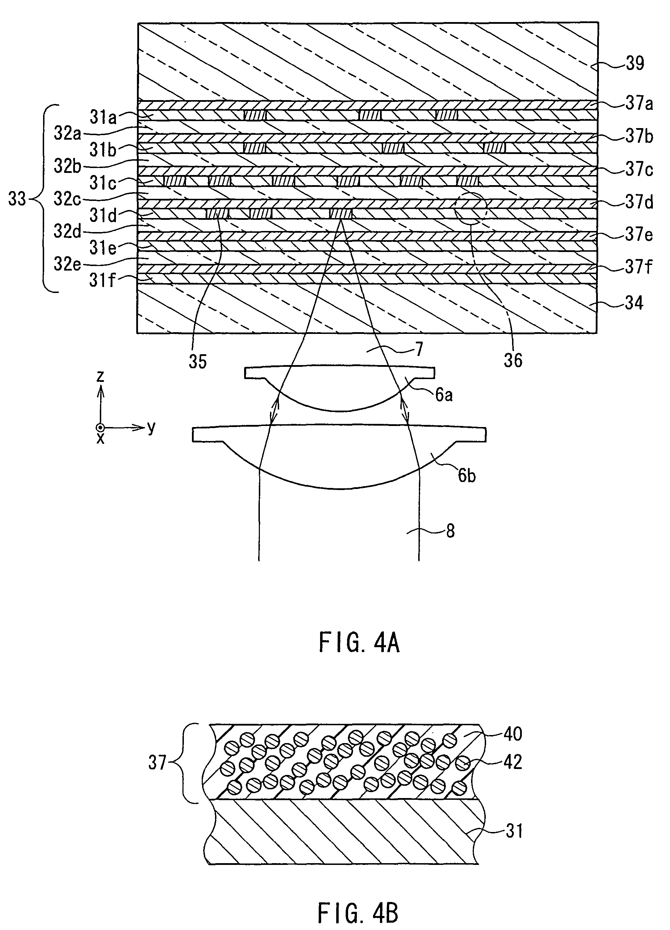

An information recording medium and a method for producing the same, a recording or reproducing method, and an optical information recording and reproducing device of Embodiment 2 according to the present invention are described below with reference to FIGS. 4A and 4B.

FIG. 4A shows a cross-sectional configuration of the information recording medium of the present embodiment and a manner of how information is recorded and reproduced thereto and therefrom. FIG. 4B is an enlarged view showing a recording layer shown in FIG. 4A.

As shown in FIG. 4A, in the information recording medium of the present embodiment, a recording portion 33 and a protective layer 34 are formed on a substrate 39. The recording portion 33 includes a plurality of stacks, each of which is composed of a recording layer and a recording auxiliary layer, and intermediate layers, each of which is interposed between the stacks. More specifically, in the recording portion 33, a recording auxiliary layer 37a, a recording layer 31a, an intermediate layer 32a, a recording auxiliary layer 37b, a recording layer 31b, an intermediate layer 32b, ... an intermediate layer 32e, a recording auxiliary layer 37f, and a recording layer 31f are stacked in this order from a substrate 39 side. In the information recording medium of the present embodiment, the inclusion of a plurality of recording layers in the recording portion 33 allows the three-dimensional recording of information, that is, the recording in a thickness direction in a plurality of layers thus stacked to be performed, in addition to the recording of information in a planar direction. Hereinafter, an arbitrary recording layer among the recording layers 31a to 31f will be referred to as a recording layer 31, an arbitrary intermediate layer among the intermediate layers 32a to 32e will be referred to as an intermediate layer 32, and an arbitrary recording auxiliary layer among the recording auxiliary layers 37a to 37f will be referred to as a recording auxiliary layer 37.

FIG. 4B is an enlarged view showing a recording layer 31 and a recording auxiliary layer 37 (in a region 36 shown in FIG. 4A). As shown in FIG. 4B, the recording auxiliary layer 37 is disposed in contact with the recording layer 31. The recording auxiliary layer 37 is formed by dispersing a first phosphor 42 in particle form in a resin 40 or the like as a binder. The recording layer 31 is formed with a photosensitive material. It should be noted that the recording layer 31 may contain a resin substantially transparent with respect to the recording light and the reproducing light, for instance, PMMA or a UV-hardening resin, in addition to the photosensitive material. An amount of the resin (binder) contained in the recording auxiliary layer 37 is not limited particularly as long as the shape of the recording auxiliary layer 37 is maintained, and the content thereof may be approximately 1 percent by volume (hereinafter referred to as vol%) to 10 vol%.

The foregoing resin (binder) is required to be substantially transparent with respect to the recording light and the reproducing light. The binder does not need to be a material whose optical constant changes with respect to a luminescence (second light) emitted from the first phosphor 42, and rather it is preferable that the optical constant does not change. This is because in the information recording medium of the present embodiment, the foregoing resin (binder) does not function as a recording material, but the recording is carried out with respect to the recording layer 31. Examples of the foregoing resin (binder) include PMMA, polymethyl acrylate, polycarbonate, polystyrene, and polyvinyl alcohol.

In the configuration in which the first phosphor is contained in the recording layer as is the case with the information recording medium of Embodiment 1, the amount of the photosensitive material contained in the recording layer is decreased. An optical constant such as the refractive index of the photosensitive material changes from before to after the recording of information, whereas an optical constant of the phosphor does not change. Therefore, in an embodiment in which a phosphor is contained in a recording layer, an amount of change in an optical constant such as a refractive index from before to after the recording of information is small. In the case where a phosphor is not contained in the recording layer 31 and the recording auxiliary layer 37 containing the first phosphor 42 is provided separately from the recording layer 31 as in the information recording medium of the present embodiment, the amount of change in the optical constant in the recording layer 31 can be increased. Further, in this case, it is unnecessary to mix the photosensitive material and the first phosphor homogeneously as in the case of the embodiment in which the recording layer is formed by mixing the photosensitive material and the particle-form first phosphor. Therefore, the formation of the recording layer is easy.

In FIG. 4A, the irradiation is performed with the recording light and the reproducing light from the recording layer side, but the configuration is not limited to this. Information may be recorded and reproduced by irradiation with the recording light and the reproducing light from the recording auxiliary layer side.

The first phosphor 42 has the same property and function, and is made of the same material, as those of the first phosphor contained in the recording layer 1 of the information recording medium of Embodiment 1 described above. In the example shown in FIG. 4B, the first phosphor 42 is in particle form, but the form thereof is not limited to this. Further, the first phosphor 42 may be formed with an organic material. In the case where the first phosphor 42 is made of an organic material, excellent recording auxiliary layers with less roughness can be formed, without using a binder.

Further, the substrate 39, the protective layer 34, and the intermediate layers 32 have the same functions, and are made of the same materials, as those of the substrate 9, the protective layer 4, and the intermediate layers 2 of the information recording medium of Embodiment 1 described above, respectively.

Next, the recording or reproducing method with respect to the information recording medium of the present embodiment is described below.

In the information recording medium of the present embodiment, like in the recording layer 1 of the information recording medium of Embodiment 1, a non-linear phenomenon such as two-photon absorption is induced at a portion of the recording auxiliary layer 37 where the recording light is focused, and the first phosphor 42 emits a second light (luminescence) having a wavelength that looks as if a light (first light) having a wavelength half the recording wavelength λ₁ were absorbed. The second light is absorbed by the photosensitive material of the recording layer 31 disposed in contact with the recording auxiliary layer 37. The photosensitive material 40 having absorbed the second light has a change in its optical constant, whereby an information bit 35 is formed. In the information recording medium of the present embodiment also, like the information recording medium of Embodiment 1, a material characterized in that its absorptivity with respect to the second light is greater than its absorptivities with respect to a recording light and a reproducing light is selected as the photosensitive material 40. Further, a two-photon absorption sensitivity of the first phosphor 42 with respect to the recording light is greater than a two-photon absorption sensitivity of the photosensitive material 40 with respect to the recording light. Therefore, in the information recording medium of the present embodiment, the recording of information is performed with higher sensitivity at a higher speed as compared with the conventional information recording medium for recording information directly in the photosensitive material 40 by two-photon absorption.

It should be noted that in an information recording medium subjected to recording by multiphoton absorption, a first phosphor 42 that absorbs the first light having a wavelength of λ₁/n (n is an integer not less than 3) and having a greater n-photon absorption sensitivity with respect to the recording light than that of the photosensitive material 40 may be selected, like in Embodiment 1.

As a method of the present embodiment for producing an information recording medium, a method in which the layers are formed by applying materials in this order, as in Embodiment 1, is preferable, since it is an easy and low-cost method.

Further, the recording or reproducing method with respect to the information recording medium of the present embodiment is identical to that of Embodiment 1, and the recording and reproduction of information can be carried out using an optical information recording and reproducing device shown in FIG. 3. However, in the present embodiment, a pair of lenses (6a, 6b) are used as the objective lens 6 (see FIG. 4A).

### (Embodiment 3)

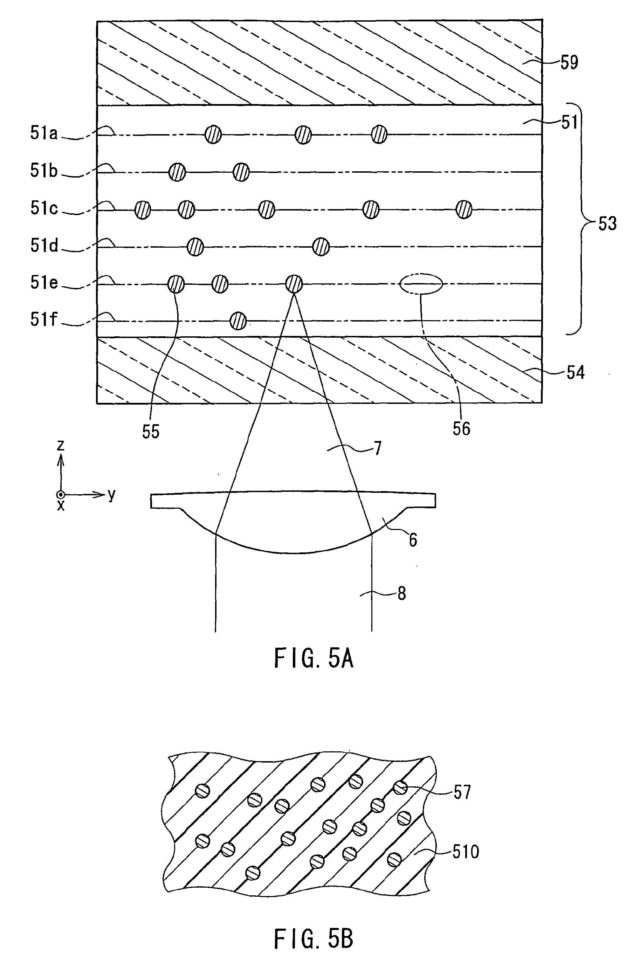

An information recording medium and a method for producing the same, a recording or reproducing method, and an optical information recording and reproducing device of Embodiment 3 according to the present invention are described below with reference to FIGS. 5A and 5B.

FIG. 5A shows a cross-sectional configuration of the information recording medium of the present embodiment and a manner of how information is recorded and reproduced thereto and therefrom. FIG. 5B is an enlarged view showing a recording layer shown in FIG. 5A.

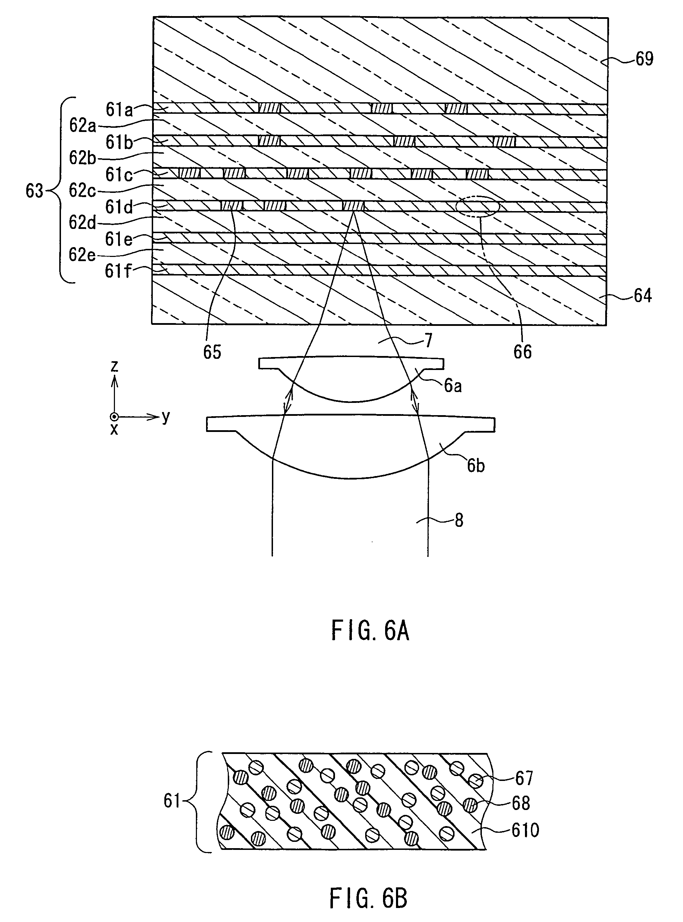

As shown in FIG. 5A, in the information recording medium of the present embodiment, a recording portion 53 and a protective layer 54 are formed on a substrate 59. This configuration differs from the information recording media of Embodiments 1 and 2 in that an entirety of the recording portion 53 functions as the recording layer 51. The thickness of the recording portion 53 (the recording layer 51) preferably is not less than twice the longer wavelength among the wavelength of the recording light and the wavelength of the reproducing light. Rows of information bits 55 are recorded in the recording layer 51 so that each row is recorded on substantially the same plane. Thus, three-dimensional information recording is realized by providing a plurality of virtual recording planes (51a to 51f), which are bit rows actually, in the recording layer 51. It should be noted that in FIG. 5A, 6 denotes an objective lens, 7 denotes a converged light, and 8 denotes a laser light.

FIG. 5B is an enlarged view showing a recording layer 51 (in a region 56 shown in FIG. 5A. As shown in FIG. 5B, the recording layer 51 is formed by dispersing a first phosphor 57 in the photosensitive material 510. The first phosphor 57 has the same property and function, and is made of the same material, as those of the first phosphor of Embodiment 1 described above. In the example shown in FIG. 5B, the first phosphor 57 is in particle form, but the form thereof is not limited to this. Further, the first phosphor 57 may be formed with an organic material. The photosensitive material 510 also has the same property and function, and is made of the same material, as those of the photosensitive material of Embodiment 1 described above.

As the method of the present embodiment for producing an information recording medium, the following methods can be used, like in Embodiment 1: a method in which a coating containing the photosensitive material 510 and the first phosphor 57 is applied on the substrate 59; and a method in which the recording layer 51 (recording portion 53) is formed by casting or injection molding. By such a method, an information recording medium can be produced easily and at a low cost.

Further, a recording or reproducing method of the present embodiment with respect to the information recording medium is identical to that of Embodiment 1, and by the method, information can be recorded and reproduced by using the optical information recording and reproducing device shown in FIG. 3.

### (Embodiment 4)

An information recording medium and a method for producing the same, a recording or reproducing method, and an optical information recording and reproducing device of Embodiment 4 according to the present invention are described below with reference to FIGS. 6A and 6B.

FIG. 6A shows a cross-sectional configuration of the information recording medium of the present embodiment and a manner of how information is recorded and reproduced thereto and therefrom. FIG. 6B is an enlarged view showing a recording layer shown in FIG. 6A.

As shown in FIG.6A, in the information recording medium of the present embodiment, a recording portion 63 and a protective layer 64 are formed on a substrate 69. The recording portion 63 includes a plurality of recording layers 61a to 61f, and a plurality of intermediate layers 62a to 62e. The recording layers and the intermediate layers are stacked alternately. It should be noted that hereinafter an arbitrary recording layer among the recording layers 61a to 61f will be referred to as a recording layer 61, and an arbitrary intermediate layer among the intermediate layers 62a to 62e will be referred to as an intermediate layer 62.

As shown in FIG. 6A, in the information recording medium of the present embodiment also, the protective layer 4 is on the light incident side at the times of recording and reproducing of information, as in Embodiment 1. At the time of recording, a laser light 8 is focused onto any one of the recording layers 61a to 61f by an objective lens 6 (lens pair 6a, 6b) (converged light 7), so that an information bit 65 is formed. At the time of reproducing, the laser light 8 is focused onto any desired one of the recording layers 61a to 61f by the objective lens 6 (lens pair 6a, 6b) (converged light 7), so that information is reproduced by utilizing light reflected by the information bit 65.

FIG. 6B is an enlarged view showing a recording layer 61 (in a region 66 shown in FIG. 6A). The information recording medium of the present embodiment differs from the information recording medium of Embodiment 1 in that the recording layer 61 further includes a second phosphor 68 that has a property of absorbing a third light having a wavelength of λ₂/n and emitting a fourth light having a wavelength longer than that of the third light. λ₂ represents a wavelength of an erasing light emitted from a light source for erasing. The wavelength of the fourth light is in an absorption wavelength range of a photosensitive material 610 in which information is recorded by absorbing a fluorescence (second light) emitted by the first phosphor 67, and further, it is longer than an absorption wavelength range suitable for the erasure, for instance, longer than λ₁/n, in the foregoing absorption wavelength range of the photosensitive material 610. The n-photon absorption sensitivity of the second phosphor 68 with respect to the erasing light is greater than a n-photon absorption sensitivity of the photosensitive material 610 with respect to the erasing light in which information is recorded. Therefore, in the case of the information recording medium of the present embodiment, the information erasure sensitivity by two-photon absorption is improved. The second phosphor 68 may be an inorganic material or an organic material, as is the case with the first phosphor 67.

It should be noted that the first phosphor 67 has the same property and function, and is made of the same material, as those of the first phosphor of Embodiment 1 described above. In the example shown in FIG. 6B, the first phosphor 67 and the second phosphor 68 are in particle form, but the form thereof is not limited to this. Among the first phosphor 67 and the second phosphor 68, at least one may be an organic material. For the photosensitive material 610, an information-erasable photon-mode recording material, for instance, diarylethene, is used.

In the case of using diarylethene having an absorption wavelength of 0.31 µm to 0.42 µm, an absorption wavelength suitable for erasing information bits is, for instance, 0.45 µm to 0.57 µm. After recording, the information bits 65 may be caused to absorb light having a wavelength of 0.45 µm to 0.57 µm, whereby information can be erased.

For instance, in the case where information recording and reproduction are to be carried out by two-photon absorption, a material that has a property of absorbing a light having a wavelength of, for instance, 0.33 µm (first light) and emitting a light having a wavelength of, for instance, 0.34 µm to 0.42 µm (second light) may be used for the first phosphor 67, and a phosphor that has a property of absorbing a light having a wavelength of, for instance, 0.49 µm (third light) and emitting a light having a wavelength of, for instance, 0.50 µm to 0.57 µm (fourth light) may be selected for the second phosphor 68. In this case, the wavelength of the recording light is, for instance, 0.66 µm, the wavelength of the reproducing light is, for instance, 0.63 µm, and the wavelength of the erasing light is 0.98 µm.

In the information recording medium of the present embodiment, organic fluorochromes are particularly suitable for the first phosphor 67 and the second phosphor 68. Organic fluorochromes have narrow absorption wavelength ranges. Therefore, the first phosphor 67 and the second phosphor 68 can be selected so that an absorption wavelength and a fluorescence wavelength of one of the foregoing phosphors do not overlap those of the other phosphor, respectively, whereby the recording sensitivity and the erasing sensitivity both can be enhanced.

It is preferable that a p-septphenyl-based fluorochrome, for instance, is used for the first phosphor 67, a diphenylaminostilbene·based fluorochrome such as 4,4'-bisdiphenylaminostilbene, for instance, is used for the second phosphor 68, and diarylethene, for instance, is used for the photosensitive material 610. This is because the center wavelength of the fluorescence wavelength of the p-septphenyl-based fluorochrome substantially coincides with the center wavelength of the absorption wavelength of diarylethene, and the center wavelength of the fluorescence wavelength of the diphenylaminostilbene-based fluorochrome substantially coincides with the center wavelength of the absorption wavelength of diarylethene in the state where information is recorded. Besides, since these fluorochromes are mixed easily in diarylethene, a recording layer with excellent homogeneity can be formed.

Further, in the recording layer 61, the photosensitive material 610, the first phosphor 67, and the second phosphor 68 may be mixed simply, but it is preferable that, to a side chain of one material selected from the group consisting of the photosensitive material, the first phosphor, and the second phosphor, at least one of the remaining two materials is bonded. Since one material selected from the group consisting of the photosensitive material, the first phosphor, and the second phosphor is adjacent to at least one of the remaining two materials, the recording sensitivity and/or the erasing sensitivity is improved further. Besides, there is no need to mix the photosensitive material, the first phosphor 67, and the second phosphor 68 homogeneously. Therefore, the formation of the recording layer is facilitated.

In FIG. 6A, the configuration is a multilayer configuration in which the recording layers 61 and the intermediate layer 62 are stacked alternately, but as the information recording medium of Embodiment 3, the configuration may be such that the entirety of the recording portion constitutes one recording layer. Alternatively, the configuration may be such that the photosensitive material 610, the first phosphor 67, and the second phosphor 68 are contained in different layers, respectively, and they are stacked on one another.

Still further, in the information recording medium of the present embodiment, the recording portion 63 may include a first recording auxiliary layer containing the first phosphor, a second recording auxiliary layer containing the second phosphor, and a recording layer containing the photosensitive material so that the recording layer is interposed between the first and second recording auxiliary layers so as to be in contact with the both. In this case, the configuration may be such that a plurality of stacks, each of which includes the first recording auxiliary layer, the second recording auxiliary layer, and the recording layer are provided, and an intermediate layer that is substantially transparent with respect to the recording light and the reproducing light is interposed between adjacent stacks.

An example of a method for producing the information recording medium of the present embodiment is a method that includes, for instance, the step of forming a recording layer by applying a coating containing the photosensitive material, the first phosphor, and the second phosphor over the substrate 49, and the step of forming an intermediate layer by applying a coating made of a material substantially transparent with respect to the recording light and the reproducing light, wherein the steps are performed alternately.

An optical information recording and reproducing device for recording and reproducing information to and from the information recording medium according to the present embodiment is equipped with a light source for erasing.

The recording or reproducing method with respect to the information recording medium of the present embodiment is identical to that of Embodiment 1.

Embodiments of the present invention have been described so far as Embodiments 1 to 4, but the present invention is not limited to these, and the information recording media, the methods for producing the same, the recording or reproducing methods, the configurations of the optical information recording and reproducing devices of the respective embodiments can be combined, and identical effects can be achieved. Further, examples of the information recording media and the optical information recording and reproducing devices of the present invention include those of the rewritable type, in addition to those of the write-once type.

Further, information recording media, each of which includes six recording layers, are described as Embodiments 1 to 4, but the number of the stacked layers is not limited to this, and the stacking is allowed as long as the number of layers is not less than 2 and not more than 100.

Still further, optical disks are described as examples of the information recording media of Embodiments 1 to 4, but the scope of the present invention includes applications thereof to card-type, drum-type, and tape-type recording media.

It should be noted that the objective lens and the collimator lens used in the above-described embodiments are identical to those commonly known as lenses, and they are called as such for convenience's sake.

Next, examples of the information recording medium of the present invention are described below. The information recording medium of an example described below is an example of the information recording medium of Embodiment 1 described above, which is shown in FIG. 1.

### (Example)

On a substrate 9 made of polycarbonate (absorption wavelength: not more than 0.36 µm), with a thickness of 1.1 mm, on which a track groove (a groove for groove recording, with a pitch of 0.51 µm and a groove depth of 0.2 µm) was formed, recording layers 1, each of which had a thickness of 0.1 µm, and intermediate layers 2, each of which had a thickness of 3 µm, were formed alternately by spin coating, whereby a recording portion 3 was formed (recording layers 1a to 1f, intermediate layers 2a to 2e). Further, a protective layer 4 made of polycarbonate (absorption wavelength: not more than 0.36 µm), with a thickness of 75 µm, was formed thereon.

Each of the recording layers 1a to 1f was formed by using a coating containing 50 vol% of 2"',5"'-didecyl p-septphenyl (fluorescence wavelength: 0.39 µm) (having a two-photon absorption sensitivity 500 times the two-photon sensitivity of diarylethene with respect to a light of 0.66 µm) and 50 vol% of diarylethene (absorption wavelength: 0.31 µm to 0.42 µm). The intermediate layers 2a to 2e were formed by using a coating containing a UV-hardening resin (absorption wavelength: not more than 0.36 µm).

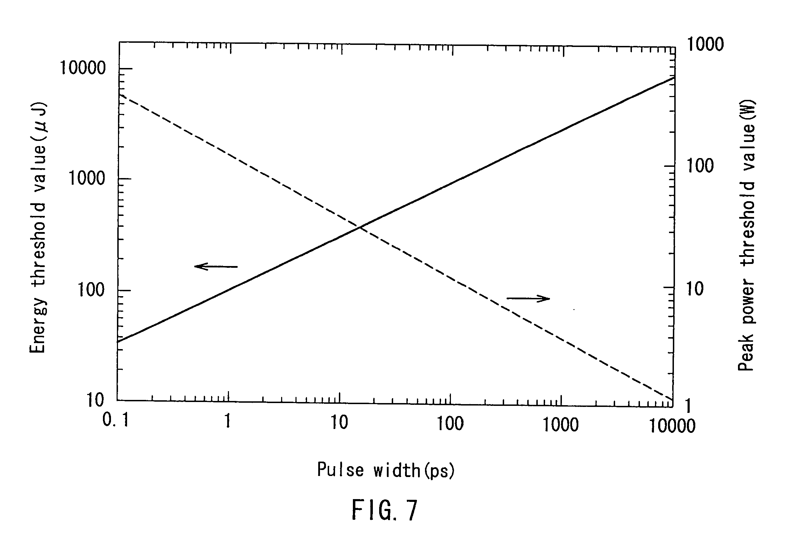

FIG. 7 shows the results of experiments of the recording to the information recording medium of Example 1 by two-photon absorption, in which irradiation of a pulse laser light with a wavelength of 660 nm was performed with the pulse width being varied, and an energy threshold value and a peak power threshold value at the time of recording one bit were determined. There was a tendency such that the longer the pulse width of the pulse laser light was, the lower the peak power threshold value for recording one bit to the information recording medium was. By setting the pulse width to not less than 5 picoseconds, the peak power threshold value was reduced to not more than 50 W. When the pulse width was 3 nanoseconds, an information bit was formed with a peak power threshold value of 2.2 W.

On the other hand, the energy threshold value necessary for recording one bit became lowest, 36 microJ, with respect to a laser light of 100 femtoseconds, and a tendency was perceived such that as the pulse width increased therefrom, the energy threshold value gradually increased. By setting the pulse width to not more than 3 nanoseconds, the energy threshold value was reduced to not more than 6 nanoJ.

The above-described result shows that one information bit was formed in the information recording medium of Example 1 with one pulse, by using the laser light having a peak power of 2.2 W, in the case where the pulse width thereof was set to 3 nanoseconds.

### (Comparative Example)

An information recording medium was produced in the same manner as Example 1 except that the recording layers 1a to 1f were formed with diarylethene (absorption wavelength: 0.31 µm to 0.42 µm) alone.

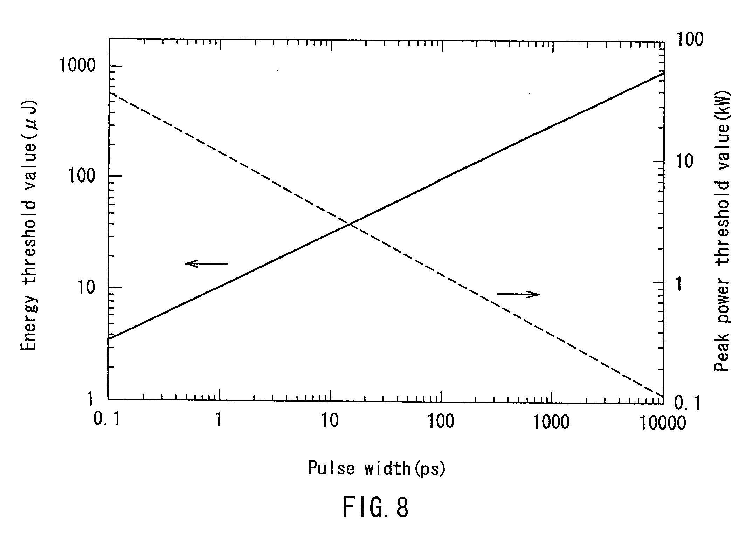

FIG. 8 shows the results of experiments of the recording to the information recording medium of Comparative Example by two-photon absorption, in which the irradiation of a pulse laser light with a wavelength of 660 nm was performed with the pulse width being varied, and an energy threshold value and a peak power threshold value at the time of recording one bit were determined. FIG. 8 shows that with the information recording medium of Comparative Example, in the case where the pulse width was set to 3 nanoseconds, one information bit was formed with one pulse, by using a laser light having a peak power of 200 W.

Comparing the information recording medium of Example and the information recording medium of Comparative Example, it was possible to form one information bit in the information recording medium of Example with one pulse by using a laser light having a peak power of not more than 3 W, whereas it was impossible to form one information bit in the information recording medium of Comparative Example with one pulse by using a laser light having a peak power of not more than 3 W. Besides, it was determined that in the case where the pulse width was set to 100 femtoseconds to 10 nanoseconds, the recording sensitivity of the information recording medium of Example was improved to approximately 100 times that of the information recording medium of Comparative Example.

### Industrial Applicability

With the information recording medium, the method for producing the same, the recording or reproducing method, and the optical information recording and reproducing device of the present invention, the recording sensitivity is improved. Therefore, unless a laser light has an extremely high peak power as conventionally is used, one information bit can be formed with one pulse. Consequently, an information recording medium and an optical information recording and reproducing device that feature high sensitivity and high-speed recording can be provided.

## Claims

1. An information recording medium comprising a recording portion that is irradiated with a recording light or a reproducing light so that information is recorded or reproduced thereto or therefrom, wherein the recording portion includes:
a first phosphor that has a property of absorbing a first light having a wavelength of λ₁/n and then emitting a second light, where λ₁ is a wavelength of the recording light and n is an integer not less than 2; and
a photon-mode photosensitive material that absorbs the second light and then exhibits a change in an optical constant thereof,
wherein a n-photon absorption sensitivity of the first phosphor with respect to the recording light is greater than a n-photon absorption sensitivity of the photosensitive material with respect to the recording light.

2. The information recording medium according to claim 1,
wherein the recording portion includes one or more recording layers, the recording layer including the photosensitive material and the first phosphor mixed in the photosensitive material.

3. The information recording medium according to claim 2,
wherein the recording portion includes a plurality of the recording layers, the plurality of the recording layers being stacked with an intermediate layer being interposed between the recording layers, the intermediate layer being substantially transparent with respect to the recording light and the reproducing light.

4. The information recording medium according to claim 1,
wherein the recording portion includes:
a recording auxiliary layer containing the first phosphor; and
a recording layer containing the photosensitive material, the recording layer being disposed in contact with the recording auxiliary layer.

5. The information recording medium according to claim 4,
wherein a plurality of stacks, each of which is composed of the recording layer and the recording auxiliary layer, are provided, the stacks being stacked with an intermediate layer being interposed between adjacent stacks, the intermediate layer being substantially transparent with respect to the recording light and the reproducing light.

6. The information recording medium according to claim 2, wherein an entirety of the recording portion is the recording layer.

7. The information recording medium according to claim 6, wherein the recording layer has a thickness not less than twice the longer wavelength among a wavelength of the recording light and a wavelength of the reproducing light.

8. The information recording medium according to claim 1, wherein information recorded therein is erased by irradiation with an erasing light having a wavelength of λ₂,
wherein
the recording portion further includes a second phosphor that has a property of absorbing a third light having a wavelength of λ₂/n and then emitting a fourth light, the fourth light having a wavelength that is longer than λ₁/n and falls in a range of wavelengths of light absorbed by the photosensitive material in an information-recorded state, and
a n-photon absorption sensitivity of the second phosphor with respect to the erasing light is greater than a n-photon absorption sensitivity of the photosensitive material in the information-recorded state with respect to the erasing light.

9. The information recording medium according to claim 1, wherein the second light has a wavelength shorter than the wavelength of the recording light and the wavelength of the reproducing light.

10. The information recording medium according to claim 9, wherein the wavelength of the second light is not less than 0.3 µm and not more than 0.5 µm.

11. The information recording medium according to claim 1, wherein the photosensitive material is substantially transparent with respect to the recording light and the reproducing light.

12. The information recording medium according to claim 1, wherein the photosensitive material contains a material that is capable of absorbing the first light.

13. The information recording medium according to claim 1, wherein the photosensitive material is a photochromic material.

14. The information recording medium according to claim 13, wherein the photochromic material contains diarylethene.

15. The information recording medium according to claim 2,
wherein
the photosensitive material contains diarylethene, and
the recording layer further contains a resin substantially transparent with respect to the recording light and the reproducing light.

16. The information recording medium according to claim 1, wherein the photosensitive material is a side-chain-type liquid crystal polymer or a photopolymer.

17. The information recording medium according to claim 1, wherein the optical constant is a refractive index.

18. The information recording medium according to claim 1, wherein the first phosphor is in a form of particles.

19. The information recording medium according to claim 18, wherein the particles have an average particle diameter smaller than the wavelength of the recording light and the wavelength of the reproducing light.

20. The information recording medium according to claim 18, wherein the particles are made of an inorganic material.

21. The information recording medium according to claim 20, wherein the inorganic material contains at least one material selected from the group consisting of europium-activated strontium-magnesium pyrophosphate and barium silicate.

22. The information recording medium according to claim 18, wherein the particles are made of a semiconductor material.

23. The information recording medium according to claim 22, wherein the particles made of the semiconductor material are deactivated.

24. The information recording medium according to claim 22, wherein the particles made of the semiconductor material are deactivated by doping with hydrogen.

25. The information recording medium according to claim 22, wherein the semiconductor material has an energy gap of not less than 2.5 eV and not more than 8.3 eV

26. The information recording medium according to claim 22, wherein the semiconductor material contains at least one material selected from the group consisting of zinc oxide, gallium nitride, zinc selenide, aluminum phosphide, zinc sulfide, cadmium sulfide, silicon, germanium, tin oxide, titanium oxide, tungsten oxide, strontium titanate, silicon carbide, and indium oxide.

27. The information recording medium according to claim 1, wherein the first phosphor is an organic fluorochrome.

28. The information recording medium according to claim 2, wherein
the first phosphor is an organic fluorochrome, and
the recording layer further contains a resin substantially transparent with respect to the recording light and the reproducing light.

29. The information recording medium according to claim 28, wherein the resin substantially transparent with respect to the recording light and the reproducing light contains a dendrimer polymer.

30. The information recording medium according to claim 27, wherein the organic fluorochrome contains a p-septphenyl-based fluorochrome.

31. The information recording medium according to claim 1,
wherein
both of the photosensitive material and the first phosphor are organic materials, respectively, and
either one of the photosensitive material and the first phosphor is bonded with a side chain of the other.

32. The information recording medium according to claim 31,
wherein
the photosensitive material contains diarylethene, and
the first phosphor contains a p-septphenyl-based fluorochrome.

33. The information recording medium according to claim 8,
wherein
the photosensitive material, the first phosphor, and the second phosphor are organic materials, respectively, and
to a side chain of one material selected from the group consisting of the photosensitive material, the first phosphor, and the second phosphor, at least one material among the remaining two materials is bonded.

34. The information recording medium according to claim 33,
wherein
the photosensitive material contains diarylethene,
the first phosphor contains a p-septphenyl-based fluorochrome, and
the second phosphor contains a diphenylaminostilbene-based fluorochrome.

35. A recording or reproducing method for recording or reproducing information to or from the information recording medium according to claim 1, the method comprising the step of:
irradiating the recording portion with the recording light so that the second light emitted from the first phosphor causes the optical constant of the photosensitive material to change,
wherein in the step, a wavelength of the second light is shorter than a wavelength of the recording light and a wavelength of the reproducing light.

36. A method for producing an information recording medium, the information recording medium including a recording portion having one or more recording layers, which is irradiated with a recording light or a reproducing light so that information is recorded or reproduced thereto or therefrom, the method comprising the step of:
forming the recording layer by applying a coating containing a first phosphor and a photosensitive material,
wherein
the first phosphor has a property of absorbing a first light having a wavelength of λ₁/n and then emitting a second light, where λ₁ is a wavelength of the recording light,
the photosensitive material absorbs the second light and then exhibits a change in an optical constant thereof, and
a n-photon absorption sensitivity of the first phosphor with respect to the recording light is greater than a n-photon absorption sensitivity of the photosensitive material with respect to the recording light.

37. The method for producing an information recording medium according to claim 36 further comprising the step of:
forming an intermediate layer by applying a coating made of a material substantially transparent with respect to the recording light and the reproducing light,
wherein the step of forming the recording layer and the step of forming the intermediate layer are repeated alternately a predetermined number of times.

38. The method for producing an information recording medium according to claim 36,
wherein in the step of forming the recording layer, the recording layer is formed by applying the coating that further contains a second phosphor,
wherein the second phosphor has a property of absorbing a third light having a wavelength of λ₂/n and then emitting a fourth light, where λ₂ is a wavelength of an erasing light with which the information recording medium is irradiated so that information recorded therein is erased,
wherein
the fourth light has a wavelength that is longer than λ₁/n and is included in a range of wavelengths of light absorbed by the photosensitive material in an information-recorded state, and
a n-photon absorption sensitivity of the second phosphor with respect to the erasing light is greater than a n-photon absorption sensitivity of the photosensitive material in the information-recorded state with respect to the erasing light.

39. An optical information recording and reproducing device for performing recording and reproduction of information to and from the information recording medium according to claim 1, the device comprising:
a light source for emitting the recording light;
a light source for emitting the reproducing light;
an objective lens for focusing the recording light and the reproducing light onto the information recording medium; and
a photodetector for detecting light reflected by the information recording medium,
wherein the optical information recording and reproducing device forms an information bit in the recording portion by utilizing a change in an optical constant of the recording portion in the information recording medium.

40. The optical information recording and reproducing device according to claim 39, further comprising a light source for emitting an erasing light.

41. The optical information recording and reproducing device according to claim 39, wherein the light source for emitting the erasing light is a flash lamp.

42. The optical information recording and reproducing device according to claim 39, wherein the light source for emitting the recording light is a pulse laser light source, a pulse width thereof being in a range of 100 femtoseconds to 10 nanoseconds.

43. The optical information recording and reproducing device according to claim 39, wherein a wavelength of the light source for emitting the reproducing light is shorter than a wavelength of the light source for emitting the recording light.

44. The optical information recording and reproducing device according to claim 39, wherein the optical information recording and reproducing device records information bits three-dimensionally in the recording portion in the information recording medium in an order such that light should not pass through already-recorded information bits in the recording portion.

45. The optical information recording and reproducing device according to claim 44, wherein information bits are recorded in the recording portion in the information recording medium, from a position farther from the objective lens toward a position closer to the objective lens in this order.

46. The optical information recording and reproducing device according to claim 39, wherein the light source for emitting the recording light and the light source for emitting the reproducing light are formed with one light source that is capable of functioning as both.
